# EUROPÄISCHE PATENTSCHRIFT

(11) **EP 3 268 543 B1**
(45) Veröffentlichungstag und Bekanntmachung des Hinweises auf die Patenterteilung: **05.02.2020**
(21) Anmeldenummer: 16702024.7
(22) Anmeldetag: 21.01.2016
(51) Int. Cl.: E03C 1/02, E03C 1/084, B05B 12/08, G05D 7/01, B05B 1/30

(54) **SANITÄRE EINSETZEINHEIT**
SANITARY UNIT FOR INSERTION IN WATER SUPPLY LINE
PIÈCE D'INSERTION SANITAIRE

(30) Priorität: 09.03.2015 DE 202015001757 U
(43) Veröffentlichungstag der Anmeldung: 17.01.2018
(73) Patentinhaber: Neoperl GmbH, 79379 Müllheim (DE)
(72) Erfinder: TWICHETT, Simon, Kidderminster DY11 7XF (GB)
(74) Vertreter: Börjes-Pestalozza, Henrich
(86) Internationale Anmeldenummer: PCT/EP2016/000108
(87) Internationale Veröffentlichungsnummer: WO 2016/142022

(56) Entgegenhaltungen:
- WO-A1-2004/083698
- DE-A1- 1 473 130
- DE-U1-202010 007 835
- DE-U1-202011 100 800

## Beschreibung

Die Erfindung betrifft eine sanitäre Einsetzeinheit mit einem Einsetzgehäuse, in dem wenigstens ein Schließventil mit einem Ringkanal vorgesehen ist, in welchem Ringkanal ein ringförmiger Ventilkörper aus elastischem Material angeordnet ist, der sich unter dem Druck des anströmenden Fluids derart verformt, dass der Ventilkörper den Ringkanal dicht verschließt.

Aus der WO 2012/156002 ist bereits eine sanitäre Einsetzeinheit mit einem scheibenförmigen Einsetzgehäuse vorbekannt. Die vorbekannte Einsetzeinheit weist in ihrem Einsetzgehäuse einen Durchflussmengenregler auf, der das pro Zeiteinheit durchströmende Wasservolumen auf einen festgelegten druckunabhängigen Wert einzuregeln hat. In dem Einsetzgehäuse ist darüber hinaus auch ein Schließventil vorgesehen, das sich von einer Offenstellung mit zunehmendem Wasserdruck in die Schließstellung bewegt, und das bei geringen Drücken zusätzliche Wassermengen am Durchflussmengenregler vorbei durch das Einsetzgehäuse hindurchfließen lässt. Auch das Schließventil der vorbekannten Einsetzeinheit weist einen im Einsetzgehäuse vorgesehenen Ringkanal auf, in dem ein ringförmiger Ventilkörper aus elastischem Material angeordnet ist, der sich unter dem Druck des anströmenden Fluids derart verformt, dass der Ventilkörper den Ringkanal dicht verschließt. Mit zunehmendem Druck wird der elastische Ventilkörper derart verformt, dass die Spalte zwischen dem Ventilkörper und den benachbarten glatten Kanalwänden des Ringkanals immer kleiner werden und die Fließgeschwindigkeit des durchströmenden Wassers immer größer wird, so dass sich auf der Abströmseite des Fließventils sogar eine Zone mit Unterdruck einstellt, die dem Schließvorgang an sich entgegenwirkt und ein erneutes Öffnen des Ringkanals verursacht. Durch die aufgrund der anstehenden Druckdifferenz bedingte Verformung des ringförmigen Ventilkörpers will dieser Ventilkörper den Ringkanal wieder schließen, so dass es zu einer raschen Folge dieser Vorgänge kommt, die sich als Schwingungen bemerkbar machen und störende Geräusche sowie Vibrationen verursacht.

Aus der DE 20 2011 100 800 U kennt man bereits eine sanitäre Einsetzeinheit, die in ihrem Einsetzgehäuse einen Durchflussmengenregler sowie ein Schließventil in sich vereint. Der in dem Einsetzgehäuse vorgesehene Durchflussmengenregler, der das pro Zeiteinheit durchströmende Wasser druckunabhängig auf einen definierten Maximalwert einregeln soll, weist einen in das Reglergehäuse integrierten Regler-Ringkanal auf, in dem ein ringförmiger Drosselkörper aus elastischen Material vorgesehen ist, der zwischen sich und einer, eine Regelprofilierung tragenden Kanalwandung einen Steuerspalt begrenzt, dessen Durchtrittsquerschnitt durch den sich unter der beim Durchströmen bildenden Druckdifferenz verformenden Drosselkörper veränderbar ist. Das in dem Einsetzgehäuse der vorbekannten Einsetzeinheit ebenfalls vorgesehene Schließventil, das bei geringen Wassermengen in einer Offenstellung einen vergrößerten lichten Öffnungsquerschnitt im Einsetzgehäuse sicherstellen soll, weist einen Ventil-Ringkanal auf, der konzentrisch zum Regler-Ringkanal angeordnet ist und im Bereich seines Kanalgrundes eine Ventilöffnung hat. In dem Ventil-Ringkanal ist ein ringförmiges Ventilkörper aus elastischem Material vorgesehen, der sich unter dem Druck des durchströmenden Mediums derart verformt, dass der Ventilkörper sich von der Offenstellung gegen die Rückstellkraft der Eigenelastizität des für den Ventilkörper verwendeten elastischen Materials in die Schließstellung bewegt. Während der in der vorbekannten Einsetzeinheit vorgesehene Durchflussmengenregler an zumindest einer der den Regler-Ringkanal begrenzenden Kanalwandungen eine Regelprofilierung aufweist, sind die dem Ventil-Ringkanal des Schließventils umgrenzenden Kanalwandungen glattwandig ausgebildet.

Aus der DE 20 2010 007 835 U kennt man bereits einen Durchflussmengenregler, der dem in den DE 20 2011 100 800 U verwendeten Durchflussmengenregler in seiner Konstruktion und Funktionsweise entspricht. Auch der aus DE 20 2010 007 835 U vorbekannte Durchflussmengenregler weist in seinem Reglergehäuse einen zentralen Ringspalt auf, in dem ein ringförmiger Drosselköper aus elastischem Material vorgesehen ist, der zwischen sich und einer inneren und/oder äußeren, mit einer Regelprofilierung versehenen Umfangswandung des Ringspaltes einen Steuerspalt begrenzt, dessen lichter Durchflussquerschnitt unter dem Druck des durchströmenden Wassers veränderbar ist. Der aus DE 20 2010 007 835 U vorbekannte Durchflussmengenregler ist selbst bei überhöhten Drücken flüssigkeitsdurchlässig, wobei der elastische Drosselkörper unter stark überhöhtem Druck durch den zentralen Ringspalt derart hindurchgezogen wird, dass sich der Durchflussweg im Durchflussmengenregler vollständig öffnet, ohne das der elastische Drosselkörper darauf noch einwirken kann.

Aus der DE 1 473 130 A kennt man bereits ein als Regelventil und letztendlich als Durchflussmengenregler dienendes sanitäres Einsetzteil mit einem ringförmigen Strömungskanal, der einen zuströmseitigen Ventileinlass mit einem abströmseitigen Ventilauslass verbindet. Dieser ringförmige Strömungskanal wird von einer äußeren Kanalwandung und einer inneren Kanalwandung umgrenzt, deren Oberfläche radial in dieser einen Richtung derart divergiert, dass der Querschnitt des Strömungskanals fortschreitend in dieser Richtung bis zu einem Punkt abnimmt, an dem die innere und die äußere Wandung übereinstimmen. In dem ringförmigen Strömungskanal ist ein ringförmiger Drosselkörper aus elastischem Material vorgesehen, der auf dem Umfang federnd ausdehnbar ist und der normalerweise an der inneren Wandung in einer Stellung gehalten ist, in welcher der Ventileinlass mit dem Ventilauslass in Verbindung steht, wodurch eine in dieser einen Richtung wirkende Druckdifferenz den Drosselkörper axial in dieser Richtung in ein Gebiet größeren Durchmessers der inneren Wandung zwingt, sodass die sich daraus ergebende Vergrößerung des Umfangs des Drosselkörpers die Strömung in dieser einen Richtung in Abhängigkeit der in dieser Richtung wirkenden Druckdifferenz reguliert. Wenn die Druckdifferenz in dieser einen Richtung ansteigt, wird somit die Strömung durch den ringförmigen Strömungskanal fortschreitend verringert, bis am Ende der Drosselkörper eine Dichtung zwischen der inneren Wandung und der benachbarten äußeren Wandung des Strömungskanals darstellt, um die Strömung durch den Ventilauslass zu beenden. Wird die Richtung der Druckdifferenz demgegenüber umgekehrt, wird der Drosselkörper aus seiner Dichtungsstellung gehoben und die Strömung ist nicht mehr behindert. Da sich das aus DE 1 473 130 A vorbekannte Ventil von den eingangs erwähnten Durchflussmengenreglern in seiner Konstruktion und Funktionsweise deutlich unterscheidet und da bei dem aus DE 1 473 130 A vorbekannten Ventil der elastische Ventilkörper druckabhängig in axialer Richtung verstellt wird, sind bei dem aus DE 1 473 130 A vorbekannten Ventil Regelprofilierungen an den Kanalwandungen weder notwendig noch vorgesehen.

Aus der WO 2004/083698 A ist bereits ein sanitäres Einbauteil vorbekannt, das als Rückflussverhinderer und kombinierter Durchflussmengenregler ausgebildet ist. Solche Rückflussverhinderer gehen nur dann in ihre Schließstellung, wenn ein Rückfluss entgegen der üblichen Strömungsrichtung erfolgt. Der vorbekannte Rückflussverhinderer weist ein Gehäuse auf, in dessen Gehäuseinneren ein ringförmiges Lippenformteil vorgesehen ist, das mit einem im Zentrum der Ringöffnung des Lippenformteils angeordneten Gehäusekern zusammenwirkt. Das ringförmige Lippenformteil des vorbekannten Rückflussverhinderers hat dazu an seinem dem Gehäusekern gegenüberliegenden Ringinnenumfang eine zuströmseitige Regellippe und eine abströmseitige Dichtlippe. Während die zuströmseitige Regellippe mit einem profilierten Teilbereich des Gehäusekerns derart zusammenwirkt, dass sich die entgegen der Strömungsrichtung orientierte Regellippe mit steigendem Druck des anströmenden Fluids zunehmend in die Profilierung am Gehäusekern eindrückt, so dass die pro Zeiteinheit durchströmende Wassermenge einen festgelegten Maximalwert nicht übersteigt, legt sich die in die übliche Strömungsrichtung orientierte Dichtlippe an einen glattwandig ausgebildeten abströmseitigen Teilbereich des Gehäusekerns dicht an, wenn das Fluid durch eine unerwünschte Rückströmung die Dichtlippe in Richtung zum Gehäusekern verformt. Die somit als Bestandteil eines Ventilkörpers dienende Dichtlippe des vorbekannten Rückflussverhinderers wirkt somit nicht mit dem eine Profilierung aufweisenden Teilbereich des Gehäusekerns zusammen.

Es besteht daher insbesondere die Aufgabe, eine sanitäre Einsetzeinheit mit zumindest einem Schließventil zu schaffen, bei dem ein unerwünschtes Aufschwingen und eine Geräuschbildung des zumindest einen Schließventiles vermieden wird.

Die erfindungsgemäße Lösung dieser Aufgabe besteht bei der sanitären Einsetzeinheit der eingangs erwähnten Art insbesondere darin, dass der für den Ventilkörper vorgesehene Ringkanal des zumindest einen Schließventils an einer innenliegenden und/oder außenliegenden Kanalwandung des Ringkanals eine Profilierung aufweist.

Die erfindungsgemäße sanitäre Einsetzeinheit hat ein Einsetzgehäuse, das an geeigneter Stelle in eine sanitäre Versorgungsleitung und insbesondere in eine Wasserleitung einsetzbar ist. In dem Einsetzgehäuse der erfindungsgemäßen Einsetzeinheit ist wenigstens ein Schließventil mit einem Ringkanal vorgesehen, in dem ein ringförmiger Ventilkörper aus elastischem Material angeordnet ist. Dieser elastische Ventilkörper verformt sich unter dem Druck des anströmenden Fluids derart, dass der Ventilkörper den Ringkanal dicht verschließt. Dabei weist der für den Ventilkörper vorgesehene Ringkanal des zumindest einen Schließventils an einer innenliegenden und/oder außenliegenden Kanalwandung des Ringkanals eine Profilierung auf. Durch diese an der innenliegenden und/oder außenliegenden Kanalwandung des Ringkanals des zumindest einen Schließventiles vorgesehene Profilierung lässt sich eine bessere Steuerbarkeit des Schließventils im Schließvorgang erreichen und gleichzeitig ein unerwünschtes und mit störenden Geräuschen sowie mit Vibrationen verbundenes Aufschwingen vermeiden. Durch die an den innenliegenden und/oder außenliegenden Kanalwandungen des Ringkanals vorgesehene Profilierung fließt das Wasser nicht mit über den Umfang konstanten Geschwindigkeitsprofilen hindurch, vielmehr wird durch die in Folge der Profilierung bedingten Abstände die Ausbildung eines gleichmäßigen Geschwindigkeits- beziehungsweise Druckprofils des durchströmenden Wassers gestört, so dass ein geräuschbildendes Aufschwingen beim Schließventil der erfindungsgemäßen Einsetzeinheit wirkungsvoll vermieden wird.

Dabei sieht eine besonders vorteilhafte und leistungsfähige Ausführungsform der erfindungsgemäßen Einsetzeinheit vor, dass die Profilierung des zumindest einen Schließventiles an der Kanalwandung umlaufend ausgestaltet ist.

Eine besonders vorteilhafte und gleichzeitig auch leicht herstellbare Ausführungsform gemäß der Erfindung sieht vor, dass die Profilierung aus in Durchströmrichtung orientierten und einander abwechselnden Einformungen und Ausformungen gebildet ist.

Dabei können die Einformungen und/oder die Ausformungen eine polygone oder aber auch eine gerundete, vorzugsweise eine halbrunde, Querschnittskontur haben.

Nach einer vorteilhaften Ausführungsform gemäß der Erfindung ist vorgesehen, dass jede Einformung als der zwischen zwei vorzugsweise unmittelbar aneinander angrenzenden Ausformungen angeordnete Bereich ausgebildet ist.

Eine besonders einfach herstellbare Ausführungsform, bei der das Einsatzgehäuse der erfindungsgemäßen Einsetzeinheit auch einstückig herstellbar ist, besteht darin, dass die außenliegende Kanalwandung mit der innenliegenden Kanalwandung des zumindest einen Ringkanales über vorzugsweise radial orientierte Verbindungsstege verbunden ist und dass auf den auf der Abströmseite des zumindest einen Ringkanales angeordneten Verbindungsstegen der Ventilkörper des zumindest einen Schließventiles aufliegt.

Eine besonders leistungsfähige Ausführungsform gemäß der Erfindung sieht vor, dass die Einsetzeinheit wenigstens zwei Schließventile hat, die vorzugsweise konzentrisch zueinander im Einsetzgehäuse vorgesehen sind.

Möglich ist, dass die Einsetzeinheit in ihrem Einsetzgehäuse über zumindest ein Schließventil hinaus auch einen Rückflussverhinderer aufweist.

Eine besonders vorteilhafte und vielseitig einsetzbare Einsetzeinheit der eingangs erwähnten Art sieht vor, dass die Einsetzeinheit in ihrem Einsetzgehäuse über zumindest ein Schließventil hinaus auch einen Durchflussmengenregler und/oder einen Strahlregler aufweist. Da das zumindest eine Schließventil erst bei einem ansteigenden Flüssigkeitsdruck in seine Schließstellung geht, kann mit Hilfe des Schließventiles bei niedrigen Flüssigkeitsdrücken am Durchflussmengenregler und/oder am Strahlregler vorbei eine zusätzliche Wassermenge durch die erfindungsgemäße Einsetzeinheit geführt werden.

Dabei sieht eine bevorzugte Ausführungsform gemäß der Erfindung vor, dass das zumindest eine Schließventil einem Strahlregler und insbesondere einem Strahlzerleger des Strahlreglers vorgeschaltet oder als By-Pass dazu nebengeschaltet ist. Weiterbildungen gemäß der Erfindung ergeben sich aus der nachstehenden Beschreibung in Verbindung mit der Zeichnung sowie den Ansprüchen. Nachstehend wird die Erfindung anhand eines bevorzugten Ausführungsbeispiels noch näher beschrieben.

Es zeigt:
- Fig. 1: eine in einem Teil-Längsschnitt dargestellte sanitäre Einsetzeinheit, die in ihrem Einsetzgehäuse wenigstens ein Schließventil mit einem Ringkanal aufweist, in welchem Ringkanal ein ringförmiger Ventilkörper aus elastischem Material angeordnet ist,
- Fig. 2: die Einsetzeinheit aus Fig. 1 in einer perspektivischen Draufsicht auf ihre Zuströmseite,
- Fig. 3: die sanitäre Einsetzeinheit aus den Fig. 1 und 2 in einer Draufsicht auf ihre Zuströmseite,
- Fig. 4: die Einsetzeinheit aus den Fig. 1 bis 3 in einem Längsschnitt durch Schnittebene IV-IV aus Fig. 3 und
- Fig. 5: die Einsetzeinheit aus Fig. 1 bis 4 in einer Draufsicht auf ihre Abströmseite.

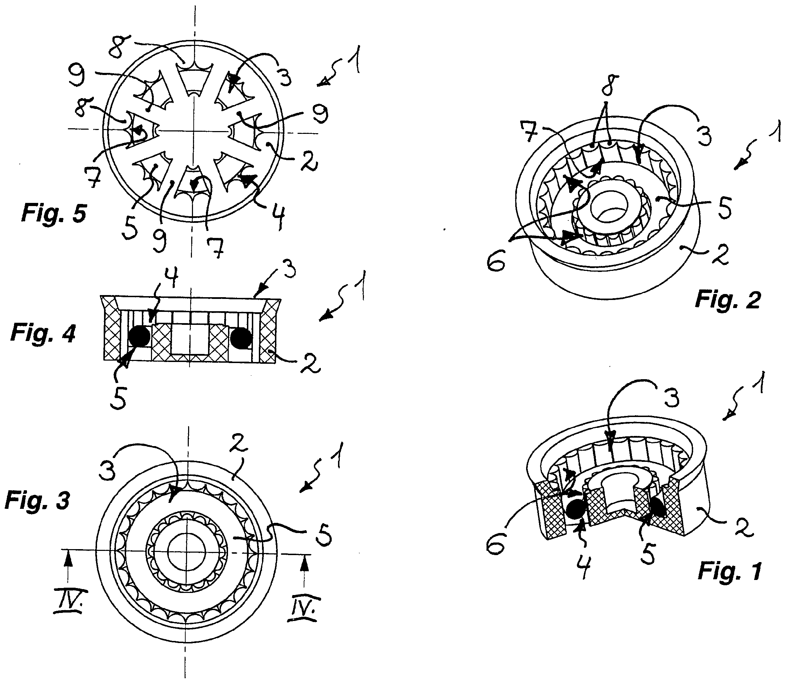

In den Figuren 1 bis 5 ist eine sanitäre Einsetzeinheit 1 mit einem Einsetzgehäuse 2 dargestellt, in dem wenigstens ein Schließventil 3 mit einem Ringkanal 4 vorgesehen ist. In dem Ringkanal 4 der Einsetzeinheit 1 ist ein ringförmiger Ventilkörper 5 aus elastischem Material angeordnet, der sich unter dem Druck des anströmenden Fluids derart verformt, dass der Ventilkörper 5 den Ringkanal 4 dicht verschließt.

Die Einsetzeinheit 1 kann mit ihrem Einsetzgehäuse 2 an geeigneter Stelle in eine sanitäre Versorgungsleitung und insbesondere in eine Wasserleitung eingesetzt werden. Der in dem Ringkanal 4 des zumindest einen Schließventils 3 befindliche Ventilkörper 5 verformt sich unter dem Druck des anströmenden Fluids derart, dass der Ventilkörper 5 den Ringkanal 4 dicht verschließt. Dabei weist der für den Ventilkörper 5 vorgesehene Ringkanal 4 des zumindest einen Schließventiles 3 an einer innenliegenden und/oder einer außenliegenden Kanalwandung eine Profilierung 6 auf. Bei dem in den Fig. 1 bis 5 dargestellten Ausführungsbeispiel ist eine solche Profilierung 6 sowohl auf der innenliegenden als auch auf der außenliegenden Kanalwandung vorgesehen.

Aus einem Vergleich der Figuren 1 bis 5 ist erkennbar, dass die Profilierung 6 an den Kanalwandungen umlaufend ausgestaltet ist. Dabei ist die an den Kanalwandungen vorgesehene Profilierung 6 aus in Durchströmrichtung orientierten und einander abwechselnden Einformungen 7 und Ausformungen 8 gebildet. Während jede Ausformung 8 hier eine gerundete und insbesondere eine etwa halbrunde Querschnittskontur hat, ist jede Einformung 7 als der zwischen zwei unmittelbar einander angrenzenden Ausformungen 8 angeordnete Bereich ausgebildet.

In der Draufsicht auf die Abströmseite des Einsetzgehäuses 2 in Figur 5 ist erkennbar, dass die außenliegende Kanalwandung mit der innenliegenden Kanalwandung des zumindest einen Ringkanales 4 über hier etwa radial orientierte Verbindungsstege 9 verbunden ist, wobei auf den auf der Abströmseite des zumindest einen Ringkanales 4 angeordneten Verbindungsstegen 9 der elastische Ventilkörper 5 des zumindest einen Schließventiles 3 aufliegt.

In einer hier nicht weiter dargestellten Ausführungsform kann die Einsetzeinheit 1 in ihrem Einsetzgehäuse 2 auch wenigstens zwei Schließventile 3 haben, die vorzugweise konzentrisch zueinander angeordnete Ringkanäle 4 im Einsetzgehäuse 2 aufweisen.

Durch die, an den auf beiden Seiten des Ringkanales 4 angeordneten Kanalwandungen befindliche Profilierung 6 ist eine bessere Steuerbarkeit des Schließventiles 3 während des Schließvorganges erreichbar und dabei werden störende Geräusche sowie Vibrationen vermieden. Da an der innenliegenden und/oder außenliegenden Kanalwandung des Ringkanales 4 des zumindest einen Schließventiles 3 die Profilierung 6 vorgesehen ist und da sich aufgrund der einander abwechselnden Einund Ausformungen 7, 8 des Profils 6 sich keine konstanten Geschwindigkeitsprofile des durchströmenden Wassers über den Ringkanal-Umfang ausbilden können, und da stattdessen die Ausbildung eines derartigen gleichmäßigen Geschwindigkeitsbeziehungsweise Druckprofils im Schließventil 3 der erfindungsgemäßen Einsetzeinheit gestört wird, wird ein mit unerwünschten Geräuschen und Vibrationen verbundenes Aufschwingen wirkungsvoll vermieden. Es versteht sich, dass im Einsetzgehäuse 2 der Einsetzeinheit 1 über das zumindest eine Schließventil 3 hinaus auch weitere Schließventile und zusätzlich oder stattdessen auch ein Rückflussverhinderer, ein Durchflussmengenregler und/oder ein Strahlregler vorgesehen sein können. Dabei sieht eine bevorzugte, hier aber nicht weiter dargestellte Ausführungsform gemäß der Erfindung vor, dass das zumindest eine Schließventil 3 einem Strahlregler und insbesondere einem Strahlzerleger des Strahlreglers vorgeschaltet oder, als By-Pass, dazu nebengeschaltet ist.

### Bezugszeichenliste

- 1: Sanitäre Einsetzeinheit
- 2: Einsetzgehäuse
- 3: Schließventil
- 4: Ringkanal
- 5: Ventilkörper
- 6: Profilierung
- 7: Einformung
- 8: Ausformung:
- 9: Verbindungssteg

## Patentansprüche

1. Sanitäre Einsetzeinheit (1) mit einem Einsetzgehäuse (2), in dem wenigstens ein Schließventil (3) mit einem Ringkanal (4) vorgesehen ist, in welchem Ringkanal (4) ein ringförmiger Ventilkörper (5) aus elastischem Material angeordnet ist, der sich unter dem Druck des anströmenden Fluids derart verformt, dass der Ventilkörper (5) den Ringkanal (4) dicht verschließt, **dadurch gekennzeichnet, dass** der für den Ventilkörper (5) vorgesehene Ringkanal (4) des zumindest einen Schließventiles (3) an einer innenliegenden und/oder außenliegenden Kanalwandung des Ringkanals (4) eine Profilierung (6) aufweist.

2. Sanitäre Einsetzeinheit nach Anspruch 1, **dadurch gekennzeichnet, dass** die Profilierung (6) an der Kanalwandung umlaufend ausgestaltet ist.

3. Sanitäre Einsetzeinheit nach Anspruch 1 oder 2, **dadurch gekennzeichnet, dass** die Profilierung (6) aus in Durchströmrichtung orientierten und einander abwechselnden Einformungen (7) und Ausformungen (8) gebildet ist.

4. Sanitäre Einsetzeinheit nach Anspruch 3 **dadurch gekennzeichnet, dass** die Einformungen (7) und/oder die Ausformungen (8) eine gerundete, vorzugsweise eine halbrunde, Querschnittskontur haben.

5. Sanitäre Einsetzeinheit nach Anspruch 3 oder 4, **dadurch gekennzeichnet, dass** jede Einformung (7) als der zwischen zwei, vorzugsweise unmittelbar aneinander angrenzenden Ausformungen (8) angeordnete Bereich ausgebildet ist.

6. Sanitäre Einsetzeinheit nach einem der Ansprüche 1 bis 5, **dadurch gekennzeichnet, dass** die außenliegende Kanalwandung mit der innenliegenden Kanalwandung des zumindest einen Ringkanales (4) über vorzugsweise radial orientierte Verbindungsstege (9) verbunden ist und dass auf den auf der Abströmseite des zumindest einen Ringkanales (4) angeordneten Verbindungsstegen (9) der Ventilkörper (5) des zumindest einen Schließventiles (3) aufliegt.

7. Sanitäre Einsetzeinheit nach einem der Ansprüche 1 bis 6, **dadurch gekennzeichnet, dass** die Einsetzeinheit (1) wenigstens zwei Schließventile (3) hat, die vorzugsweise konzentrisch zueinander im Einsetzgehäuse (2) vorgesehen sind.

8. Sanitäre Einsetzeinheit nach einem der Ansprüche 1 bis 7, **dadurch gekennzeichnet, dass** die Einsetzeinheit (1) in ihrem Einsetzgehäuse (2) über zumindest ein Schließventil (3) hinaus auch einen Rückflussverhinderer aufweist.

9. Sanitäre Einsetzeinheit nach einem der Ansprüche 1 bis 8, **dadurch gekennzeichnet, dass** die Einsetzeinheit (1) in ihrem Einsetzgehäuse (2) über zumindest ein Schließventil (3) hinaus auch einen Durchflussmengenregler und/oder einen Strahlregler aufweist.

10. Sanitäre Einsetzeinheit nach einem der Ansprüche 1 bis 9, **dadurch gekennzeichnet, dass** das zumindest eine Schließventil (3) einem Strahlregler und insbesondere einem Strahlzerleger des Strahlreglers in Strömungsrichtung vorgeschaltet oder dazu nebengeschaltet ist.

## Claims

1. Sanitary insert unit (1) having an insert housing (2) in which at least one closing valve (3) having an annular channel (4) is provided, in which annular channel (4) an annular valve body (5) made of resilient material is arranged which deforms under the pressure of the inflowing fluid such that the valve body (5) tightly closes the annular channel (4), **characterized in that** the annular channel (4), provided for the valve body (5), of the at least one closing valve (3) has profiling (6) on an internal and/or external channel wall of the annular channel (4).

2. Sanitary insert unit according to Claim 1, **characterized in that** the profiling (6) is configured in an encircling manner on the channel wall.

3. Sanitary insert unit according to Claim 1 or 2, **characterized in that** the profiling (6) is formed from alternate indentations (7) and protuberances (8) oriented in the direction of throughflow.

4. Sanitary insert unit according to Claim 3, **characterized in that** the indentations (7) and/or the protuberances (8) have a rounded, preferably semicircular, cross-sectional contour.

5. Sanitary insert unit according to Claim 3 or 4, **characterized in that** each indentation (7) is configured as the region arranged between two protuberances (8) that preferably immediately adjoin one another.

6. Sanitary insert unit according to one of Claims 1 to 5, **characterized in that** the external channel wall is connected to the internal channel wall of the at least one annular channel (4) via preferably radially oriented connecting webs (9), and **in that** the valve body (5) of the at least one closing valve (3) bears on the connecting webs (9) arranged on the outflow side of the at least one annular channel (4).

7. Sanitary insert unit according to one of Claims 1 to 6, **characterized in that** the insert unit (1) has at least two closing valves (3), which are preferably provided concentrically with one another in the insert housing (2).

8. Sanitary insert unit according to one of Claims 1 to 7, **characterized in that** the insert unit (1), in addition to at least one closing valve (3), also has a backflow preventer in its insert housing (2).

9. Sanitary insert unit according to one of Claims 1 to 8, **characterized in that** the insert unit (1), in addition to at least one closing valve (3), also has a flow rate regulator and/or a jet regulator in its insert housing (2).

10. Sanitary insert unit according to one of Claims 1 to 9, **characterized in that** the at least one closing valve (3) is connected upstream of a jet regulator and in particular a jet splitter of the jet regulator in the direction of flow or is connected alongside the latter.

## Revendications

1. Unité d'insertion sanitaire (1) comprenant un boîtier d'insertion (2), dans lequel au moins une vanne de fermeture (3) est prévue avec un canal annulaire (4), dans lequel canal annulaire (4) est disposé un corps de vanne annulaire (5) en matériau élastique qui se déforme sous la pression du fluide affluant de telle sorte que le corps de vanne (5) ferme le canal annulaire (4) de manière étanche, **caractérisée en ce que** le canal annulaire (4) de l'au moins une vanne de fermeture (3), qui est prévu pour le corps de vanne (5), présente un profilage (6) au niveau d'une paroi intérieure et/ou extérieure du canal annulaire (4).

2. Unité d'insertion sanitaire selon la revendication 1, **caractérisée en ce que** le profilage (6) est configuré sur toute la périphérie de la paroi du canal.

3. Unité d'insertion sanitaire selon la revendication 1 ou 2, **caractérisée en ce que** le profilage (6) est formé à partir de moulages (7) et de façonnages (8) orientés dans la direction d'écoulement et alternant les uns et les autres.

4. Unité d'insertion sanitaire selon la revendication 3, **caractérisée en ce que** les moulages (7) et/ou les façonnages (8) ont un contour arrondi, de préférence semi-circulaire, en coupe transversale.

5. Unité d'insertion sanitaire selon la revendication 3 ou 4, **caractérisée en ce que** chaque moulage (7) est configuré comme la zone disposée entre deux façonnages (8), de préférence directement adjacents l'un à l'autre.

6. Unité d'insertion sanitaire selon l'une des revendications 1 à 5, **caractérisée en ce que** la paroi extérieure du canal est reliée à la paroi intérieure de l'au moins un canal annulaire (4) par le biais de traverses de jonction (9) de préférence orientées radialement et **en ce que**, sur les traverses de jonction (9) disposées sur le côté d'écoulement de l'au moins un canal annulaire (4) repose le corps de vanne (5) de l'au moins une vanne de fermeture (3).

7. Unité d'insertion sanitaire selon l'une des revendications 1 à 6, **caractérisée en ce que** l'unité d'insertion (1) a au moins deux vannes de fermeture (3) qui sont prévues de préférence de manière concentrique l'une par rapport à l'autre dans le boîtier d'insertion (2).

8. Unité d'insertion sanitaire selon une des revendications 1 à 7, **caractérisée en ce que** l'unité d'insertion (1) présente également dans son boîtier d'insertion (2) un moyen anti-retour sur au moins une vanne de fermeture (3).

9. Unité d'insertion sanitaire selon l'une des revendications 1 à 8, **caractérisée en ce que** l'unité d'insertion (1) présente également dans son boîtier d'insertion (2) un régulateur de débit et/ou un aérateur sur au moins une vanne de fermeture (3).

10. Unité d'insertion sanitaire selon l'une des revendications 1 à 9, **caractérisée en ce que** l'au moins une vanne de fermeture (3) est montée en amont ou raccordée à celle-là dans la direction d'écoulement avec un aérateur et, en particulier, un brise-jet de l'aérateur.
